# EUROPÄISCHE PATENTANMELDUNG

(11) **EP 4 733 339 A1**
(43) Veröffentlichungstag der Anmeldung: **29.04.2026**
(21) Anmeldenummer: 24208554.6
(22) Anmeldetag: 24.10.2024
(51) Int. Cl.: C08G 18/02, C08G 18/18, C08G 18/28, C08G 18/79, C08G 18/80, C09D 175/04

(54) **HYDROPHILE POLYISOCYANATE AUF BASIS VON 1,5-DIISOCYANATOPENTAN MIT VERRINGERTER VISKOSITÄT**

(71) Anmelder: Covestro Deutschland AG, 51373 Leverkusen (DE)
(72) Erfinder: Laas, Hans-Josef, 51519 Odenthal (DE)
(74) Vertreter: Levpat

(57) **Zusammenfassung**

Die Erfindung betrifft eine Polyisocyanatzusammensetzung auf Basis von 1,5-Diisocyanatopentan mit verringerter Viskosität, ein Verfahren zu ihrer Herstellung und ihre Verwendung zur Herstellung von Polyurethankunststoffen. Weitere Gegenstände sind ein die Polyisocyanatzusammensetzung enthaltendes Beschichtungsmittel sowie die aus dem Beschichtungsmittel erhältliche Beschichtung.

## Beschreibung

Die Erfindung betrifft eine Polyisocyanatzusammensetzung auf Basis von 1,5-Diisocyanatopentan mit verringerter Viskosität, ein Verfahren zu ihrer Herstellung und ihre Verwendung zur Herstellung von Polyurethankunststoffen. Weitere Gegenstände sind ein die Polyisocyanatzusammensetzung enthaltendes Beschichtungsmittel sowie die aus dem Beschichtungsmittel erhältliche Beschichtung.

Wässrige Lacksysteme haben sich heute für verschiedene Anwendungsbereiche als umweltfreundliche Alternative zu lösemittelhaltigen Beschichtungsmitteln fest etabliert. Eine besondere Rolle als Rohstoff für qualitativ hochwertige wässrige Lacke spielen dabei hydrophil-modifizierte Polyisocyanate, da sie als wasserdispergierbare Vernetzerkomponenten die Formulierung wässriger Zweikomponenten-Polyurethan(2K-PUR)-Lacke ermöglichen.

Hydrophile Polyisocyanate lassen sich bereits ohne Einsatz hoher Scherkräfte feinteilig und homogen in wässrige Lackbindemitteldispersionen einrühren, was die Applikationssicherheit und die optischen Eigenschaften, insbesondere Glanz und Transparenz der erhaltenen Beschichtungen, positiv beeinflusst.

Der Trend zu nachhaltigeren Produkten führte in den letzten Jahren auch im Bereich der Polyurethane zu einer steigenden Nachfrage nach biobasierten Rohstoffen. Dies war Anlass zur Entwicklung von Polyisocyanatvernetzern auf Basis des aus Biomasse zugänglichen 1,5-Diisocyanatopentan ( auch "Pentamethylendiisocyanat" oder "PDI") (siehe z. B. EP-A 3 271 432 und WO 2016/169810). Auch hydrophile Polyisocyanatvernetzer auf Basis von PDI sind bereits bekannt.

Die WO 2016/146579 beschreibt beispielsweise sehr breit hydrophile Polyisocyanatzusammensetzungen, umfassend eine PDI-Polyisocyanatkomponente und wenigstens einen ionischen und/oder nichtionischen Emulgator. Von besonderem Interesse sind dabei solche Polyisocyanatzusammensetzungen mit nichtionischen Emulgatoren, die auf einfache und preiswerte Weise durch anteilige Urethanisierung hydrophober PDI-Polyisocyanate mit hydrophilen, monofunktionellen Polyetheralkoholen erhältlich sind.

Gegenstand der JP 2020007450 sind Umsetzungsprodukte Allophanatgruppen aufweisender, niedrigviskoser PDI-Polyisocyanurate mit monofunktionellen Polyetheralkoholen, die bei 25 °C Viskositäten im Bereich von ≥ 300 mPa s, vorzugsweise ≥ 800 mPa·s bis < 2000 mPa·s aufweisen. Viskositäten der als Edukt eingesetzten Allophanatgruppen aufweisenden PDI-Polyisocyanurate sind nicht offenbart.

CN 110183618 beschreibt ein Eintopf-Verfahren zur Herstellung nichtionischer wässriger Vernetzer durch destillative Reinigung und Umsetzung von Bio-Pentamethylendiisocyanat-Trimeren mit Polyetherpolyolen, wie z. B. Methoxypolyethylenglykolen. Angaben zur Synthese der eingesetzten PDI-Trimere und deren Kennzahlen, wie NCO-Gehalt und Viskosität, fehlen. Aus den in den Beispielen genannten NCO-Gehalten der Verfahrensprodukte und ihrer Zusammensetzung lassen sich für die Bio-Pentamethylendiisocyanat-Trimere NCO-Gehalte von 23,0 bis 24,2 Gew.-% errechnen.

Allgemein gilt, dass eine niedrige Viskosität die Dispergierbarkeit hydrophiler Polyisocyanate in wässrige Systeme erleichtert. Bei der Herstellung von Polyisocyanuratpolyisocyanaten, die in der Regel durch katalytische Trimerisierung von Diisocyanaten erfolgt, muss zum Erhalt besonders niedrigviskoser Produkte die Reaktion bei niedrigen Umsatzgraden abgebrochen werden. Aufgrund des dann hohen Anteils an idealem, aus drei Diisocyanatmolekülen bestehenden Isocyanurattrimer (n = 3) sind so hergestellte Polyisocyanuratpolyisocyanate zwar niedrigviskos, weisen gleichzeitig aber nur niedrige mittlere Isocyanatfunktionalitäten auf.

Eine niedrige Isocyanatfunktionalität stellt jedoch bei der Verwendung als Vernetzerkomponente für Beschichtungen einen Nachteil dar, da sie zu einer geringeren Vernetzungsdichte und damit geringeren Beständigkeitseigenschaften führt.

Auch für die Herstellung hydrophiler Polyisocyanate ist eine möglichst hohe Funktionalität des Ausgangspolyisocyanats wünschenswert, da Modifizierungsreaktionen, wie z. B. eine Urethanisierung mit einem hydrophilen Polyetheralkohol, immer mit einer Funktionalitätserniedrigung verbunden sind.

Aufgabe der vorliegenden Erfindung war es daher, neue nichtionisch hydrophil-modifizierte PDI-Polyisocyanate, insbesondere solche mit Polyisocyanuratstruktur, mit hoher Funktionalität und gleichzeitig niedriger Viskosität zur Verfügung zu stellen, die sich für sämtliche Anwendungsgebiete wasserdispergierbarer Polyisocyanate eignen.

Wie jetzt überraschend gefunden wurde, zeigen Umsetzungsprodukte hochviskoser, hochfunktioneller PDI-Polyisocyanurate, die mit hohem Trimerisierunggrad hergestellt wurden und daher vergleichsweise hohe Anteile an Isocyanuratpentameren (n = 5) und höheren Oligomeren bzw. vergleichsweise geringe Anteile an idealem Isocyanurattrimer (n = 3) aufweisen, mit Methoxypolyethylenglykolen eines eng definierten Molekulargewichtsbereiches deutlich niedrigere Viskositäten als die Ausgangspolyisocyanate und besitzen gleichzeitig eine hervorragende Dispergierbarkeit in wässrige Systemen.

Gegenstand der Erfindung ist eine Polyisocyanatzusammensetzung, umfassend mindestens ein Polyisocyanuratpolyisocyanat A) auf Basis von 1,5-Diisocyanatopentan, das ein zahlenmittleres Molekulargewicht von mindestens 680 g/mol und ein Gewichtsverhältnis von Isocyanurattrimer zu Isocyanuratpentamer von kleiner als 2,2 aufweist, und eine Emulgatorkomponente B), umfassend ein Urethan erhältlich durch Urethanisierung eines Polyisocyanuratpolyisocyanats A) mit einem hydrophilen Polyetheralkohol, der ein zahlenmittleres Molekulargewicht von 400 bis 600 g/mol aufweist, wobei das zahlenmittlere Molekulargewicht jeweils durch Gelpermeationschromatographie wie in der Beschreibung angegeben bestimmbar ist.

Gegenstand der Erfindung ist auch ein Verfahren zur Herstellung dieser hydrophil-modifizierten, Polyisocyanuratpolyisocyanate enthaltenden Polyisocyanatzusammensetzungen sowie ihre Verwendung als Ausgangskomponenten bei der Herstellung von Polyurethankunststoffen, insbesondere als Vernetzer für wasserlösliche oder -dispergierbare Lackbindemittel oder Lackbindemittelkomponenten mit gegenüber Isocyanatgruppen reaktionsfähigen Gruppen.

Im Rahmen dieser Erfindung bedeutet "Polyisocyanuratpolyisocyanat auf Basis von Diisocyanat X", dass das Polyisocyanuratpolyisocyanat Trimere des Diisocyanats X umfasst. Es können auch Trimere anderer Diisocyanate von dem Polyisocyanuratpolyisocyanat umfasst werden.

In einer bevorzugten Ausführungsform besteht das erfindungsgemäße Polyisocyanuratpolyisocyanat aus Oligomeren des 1,5-Diisocyanatopentan.

Erfindungsgemäß wird das zahlenmittlere Molekulargewicht (Mn) eines Polyisocyanates softwareunterstützt mittels Gelpermeationschromatographie (GPC) bei 23 °C in Tetrahydrofuran als Lösungsmittel bestimmt. Die Messung erfolgt gemäß DIN 55672-1:2016-03 "Gelpermeationschromatographie, Teil 1 - Tetrahydrofuran als Elutionsmittel".

Das Gewichtsverhältnis an Isocyanurattrimer (n = 3) zu Isocyanuratpentamer (n = 5) ergibt sich aus dem Verhältnis der aus den Chromatogrammen der genannten GPC-Methode entnommenen jeweiligen Flächenprozenten, die näherungsweise Gewichtsanteilen gleichgesetzt wurden.

Die Ausdrücke "umfassend" oder "enthaltend" bedeuten im Rahmen dieser Erfindung bevorzugt, "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %".

Numerische Bereiche, die in dem Format "in/von x bis y" angegeben sind, schließen die genannten Werte x und y ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Vorliegend ist der Begriff "aliphatisch" definiert als nicht-aromatische Kohlenwasserstoffgruppen, die gesättigt oder ungesättigt sind.

Dabei werden mit dem Begriff "linearaliphatisch" solche Verbindungen bezeichnet, die völlig frei von cyclischen Strukturelementen sind, während der Begriff "alicyclisch" oder "cycloaliphatisch" als gegebenenfalls substituierte, carbocyclische oder heterocyclische Verbindungen oder Einheiten definiert ist, die nicht aromatisch sind (wie z.B. Cycloalkane, Cycloalkene oder Oxa-, Thia-, Aza- oder Thiazacycloalkane). Besondere Beispiele sind Cyclohexylgruppen, Cyclopentylgruppen und ihre N- oder O-heterocyclischen Derivate wie z.B. Pyrimidin, Pyrazin, Tetrahydropyran oder Tetrahydrofuran.

Vorliegend ist der Begriff "araliphatisch" definiert als Kohlenwasserstoffreste, die sowohl aus einer aromatischen als auch aus einer gesättigten oder ungesättigten Kohlenwasserstoffgruppe bestehen, die direkt an den aromatischen Rest gebunden ist.

Für den Fall, dass die Gruppen oder Verbindungen als "gegebenenfalls substituiert" oder "substituiert" offenbart werden, sind geeignete Substituenten -F, -Cl, -Br, -I, -OH, -OCH₃, OCH₂CH₃, -O-Isopropyl oder-O-n-Propyl, -OCF₃, -CF₃, -S-C₁₋₆-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -Cl), C1-C6-Alkoxy (insbesondere Methoxy und Ethoxy), Hydroxy, Trifluormethyl und Trifluormethoxy, die jeweils als Ersatz für ein an Kohlenstoff gebundenes Wasserstoffatom des betreffenden Moleküls fungieren.

Die erfindungsgemäße hydrophil-modifizierte Polyisocyanatzusammensetzung auf Basis von 1,5-Diisocyanatopentan umfasst mindestens ein Polyisocyanuratpolyisocyanat A) sowie mindestens ein Urethan eines Polyisocyanuratpolyisocyanats A) mit einem hydrophilen Polyetheralkohol als nichtionischem Emulgator B). Der nichtionische Emulgator B) kann ein Urethan erhältlich durch Urethanisierung eines Polyisocyanuratpolyisocyanats A) mit einem hydrophilen Polyetheralkohol, der ein zahlenmittleres Molekulargewicht von 400 bis 600 g/mol aufweist, umfassen, im Wesentlichen daraus bestehen oder daraus bestehen, wobei das zahlenmittlere Molekulargewicht durch Gelpermeationschromatographie wie in der Beschreibung angegeben bestimmbar ist.

Polyisocyanuratpolyisocyanate A), nachfolgend auch Ausgangspolyisocyanate A) genannt, zur Herstellung der erfindungsgemäßen hydrophilen Polyisocyanatzusammensetzung sind beliebige durch katalytische Trimerisierung von einem Diisocyanat, das 1,5-Diisocyanatopentan (PDI) umfasst, erhältliche oligomere Polyisocyanuratpolyisocyanate mit einem zahlenmittleren Molekulargewicht (Mn) von mindestens 680 g/mol, bevorzugt mindestens 700 g/mol, besonders bevorzugt mindestens 720 g/mol und einem Gewichtsverhältnis von Isocyanurattrimer (n = 3) zu Isocyanuratpentamer (n = 5) von kleiner als 2,2, bevorzugt kleiner als 2,0, besonders bevorzugt kleiner als 1,9.

Die Herstellung dieser Polyisocyanate A) erfolgt nach an sich bekannten Methoden zur Isocyanattrimerisierung, wie sie beispielsweise in J. Prakt. Chem. 336 (1994) 185 - 200 beschrieben sind, durch Umsetzung (Oligomerisierung) eines Teils der Isocyanatgruppen des PDI unter Bildung von Polyisocyanatmolekülen, die aus mindestens zwei, vorzugsweise mindestens drei Diisocyanatmolekülen bestehen, wobei der Umsatz (Oligomerisierungsgrad) jeweils so gewählt wird, dass das Oligomerisierungsprodukt den vorstehend gemachten Angaben zu zahlenmittlerem Molekulargewicht (Mn) und Gewichtsverhältnis von Isocyanurattrimer (n = 3) zu Isocyanuratpentamer (n = 5) entspricht. An die eigentliche Trimerisierungsreaktion schließt sich bei der Herstellung des Polyisocyanuratpolyisocyanats A) in der Regel eine destillative oder extraktive Abtrennung des nicht umgesetzten monomeren PDI auf Werte von beispielsweise weniger als 1,0 Gew.-%, bevorzugt weniger als 0,5 Gew.-%, besonders bevorzugt weniger als 0,3 Gew.-%, bezogen auf die Gesamtmenge an oligomerisiertem Diisocyanat und monomerem Diisocyanat, an.

Konkrete Beispiele für oligomere PDI-Polyisocyanurate finden sich beispielsweise in EP-A 2 684 867, JP 2010-121011, JP 2010-254764, und JP 2013-060542.

Gegebenenfalls kann das Polyisocyanuratpolyisocyanat A) neben Isocyanuratstrukturen in untergeordneter Menge zusätzlich Uretdion-, Allophanat-, Biuret-, Iminooxadiazindionund/oder Oxadiazintrionstrukturen aufweisen.

Das zur Herstellung des Polyisocyanuratpolyisocyanats A) eingesetzte 1,5-Diisocyanatopentan ist auf verschiedene Weise, beispielsweise durch Phosgenierung in der Flüssig- oder Gasphase oder auf phosgenfreiem Weg, wie z. B. durch thermische Urethanspaltung, ausgehend von vorzugsweise biotechnologisch durch Decarboxylierung der natürlich vorkommenden Aminosäure Lysin erhaltenem 1,5-Diaminopentan zugänglich.

Gegebenenfalls können bei der Herstellung des Polyisocyanuratpolyisocyanats A) neben 1,5-Diisocyanatopentan weitere Diisocyanate mit aliphatisch, cycloaliphatisch, araliphatisch und/oder aromatisch gebundenen Isocyanatgruppen mitverwendet werden. Hierbei handelt es sich insbesondere um solche des Molekulargewichtsbereichs 140 bis 400 g/mol, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (XDI), 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Diese bei der Herstellung des Polyisocyanuratpolyisocyanats A) gegebenenfalls mitzuverwendenden Diisocyanate kommen, falls überhaupt, in Mengen von bis zu 80 Gew.%, vorzugsweise bis zu 50 Gew.-%, besonders bevorzugt bis zu 20 Gew.-%, bezogen auf die Gesamtmenge an eingesetzten Diisocyanaten, zum Einsatz.

Als Polyisocyanuratpolyisocyanat A) geeignet sind auch beliebige Gemische von PDI-Polyisocyanuraten unterschiedlichen Oligomerisierungsgrades, sofern die Gemische den oben gemachten Angaben zu zahlenmittlerem Molekulargewicht (Mn) und Gewichtsverhältnis von Isocyanurattrimer (n = 3) zu Isocyanuratpentamer (n = 5) genügen.

Bevorzugte Polyisocyanuratpolyisocyanate A) zur Herstellung der erfindungsgemäßen Polyisocyanatzusammensetzung sind PDI-Polyisocyanurate mit einer mittleren NCO-Funktionalität von 3,3 bis 5,0 und/oder einem Gehalt an Isocyanatgruppen von 15,0 bis 22,9 Gew.-%, bestimmbar nach DIN EN ISO 11909:2007-05, und/oder einer Viskosität bei 23 °C von 6000 bis 12000 mPas, bestimmbar nach DIN EN ISO 3219:1994-10 bei einer Scherrate von 250 s⁻¹. Insbesondere bevorzugt sind PDI-Polyisocyanurate mit einer mittleren NCO-Funktionalität von 3,3 bis 5,0 einem Gehalt an Isocyanatgruppen von 15,0 bis 22,9 Gew.-%, bestimmbar nach DIN EN ISO 11909:2007-05, und einer Viskosität bei 23 °C von 6000 bis 12000 mPas, bestimmbar nach DIN EN ISO 3219:1994-10 bei einer Scherrate von 250 s⁻¹.

Ganz besonders bevorzugte Polyisocyanuratpolyisocyanate A) sind Isocyanuratstrukturen enthaltende Polyisocyanate, die unter Verwendung von PDI als alleinigem Diisocyanat hergestellt wurden und eine mittlere NCO-Funktionalität von 3,4 bis 5,0, vorzugsweise von 3,5 bis 4,5, einen Gehalt an Isocyanatgruppen von 17,0 bis 22,9 Gew.-%, vorzugsweise von 19,0 bis 22,5 Gew.-%, bestimmbar nach DIN EN ISO 11909:2007-05, und eine Viskosität bei 23 °C von 7000 bis 11000 mPas, vorzugsweise von 8000 bis 10000 mPas, bestimmbar nach DIN EN ISO 3219:1994-10 bei einer Scherrate von 250 s⁻¹, aufweisen.

Die erfindungsgemäßen hydrophil-modifizierten Polyisocyanatzusammensetzung auf Basis von 1,5-Diisocyanatopentan enthalten neben dem Polyisocyanuratpolyisocyanat A) mindestens ein Urethan des Polyisocyanuratpolyisocyanats A) mit einem hydrophilen Polyetheralkohol des mittleren Molekulargewichts 400 bis 600 g/mol als nichtionischen Emulgator B). Hierbei ist denkbar, dass der nichtionische Emulgator B), sofern es sich bei dem Polyisocyanuratpolyisocyanat A) um ein Gemisch verschiedener Komponenten wie Diisocyanattrimeren und Diisocyanatpentameren handelt,
- nur Urethane einer Komponente,
- Urethane mehrerer, aber nicht aller Komponenten, oder
- Urethane aller Komponenten des Polyisocyanuratpolyisocyanats A) aufweist.

Geeignete hydrophile Polyetheralkohole sind beliebige, vorzugsweise einwertige, im statistischen Mittel 8,5 bis 13 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige einwertige Alkohole des Molekulargewichtsbereiches 32 bis 74 g/mol sein, wie z. B. Methanol, Ethanol, n-Propanol, Isopropanol, n-Butanol, Isobutanol oder sec-Butanol.

Für die Alkoxylierungsreaktion geeignete Alkylenoxide sind Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 80 mol-%, vorzugsweise zu mindestens 90 mol-% aus Ethylenoxideinheiten bestehen.

Bevorzugte Polyalkylenoxidpolyetheralkohole sind solche, die unter Verwendung von Methanol als Startermolekül hergestellt wurden. Besonders bevorzugte Polyetheralkohole sind reine Polyethylenglycolmonomethyletheralkohole, die im statistischen Mittel 8,5 bis 13, besonders bevorzugt 9 bis 12 und ganz besonders bevorzugt 10 bis 11 Ethylenoxideinheiten aufweisen.

In einer Ausführungsform ist der hydrophile Polyetheralkohol durch Alkoxylierung eines einwertigen Alkohols, der ein Molekulargewicht von 32 bis 74 g/mol aufweist, erhältlich und weist im statistischen Mittel 8,5 bis 13 Ethylenoxideinheiten pro Molekül auf.

Die Herstellung solcher bevorzugter nichtionischer Emulgatoren B) ist prinzipiell bekannt und beispielsweise in EP-B 0 206 059 und EP-B 0 540 985 beschrieben.

Gegenstand der Erfindung ist auch ein Verfahren zur Herstellung der erfindungsgemäßen Polyisocyanatzusammensetzung, dadurch gekennzeichnet, dass das Polyisocyanuratpolyisocyanat A) mit der Emulgatorkomponente B) vermischt wird oder die Polyisocyanatzusammensetzung durch anteilige Umsetzung von Polyisocyanaten des Polyisocyanuratpolyisocyanats A) mit dem hydrophilen Polyetheralkohol gebildet wird.

Die Herstellung der erfindungsgemäßen Polyisocyanatzusammensetzung kann beim erfindungsgemäßen Verfahren also durch Umsetzung des Polyisocyanuratpolyisocyanats A) mit den genannten Polyetheralkoholen entweder in einem separaten Reaktionsschritt mit anschließendem Vermischen des erhaltenen Emulgators B) mit dem in eine hydrophile Form zu überführenden PolyisocyanuratpolyisocyanatA) oder aber in der Weise erfolgen, dass man das Polyisocyanuratpolyisocyanat A) mit einer entsprechenden Menge der Polyetheralkohole abmischt, wobei sich spontan unter Urethanisierung ein erfindungsgemäßes hydrophiles Polyisocyanatgemisch bildet, das neben nicht umgesetztem Polyisocyanuratpolyisocyanat A) den sich in situ aus dem Polyetheralkohol und einem Teil der Komponente A) bildenden Emulgator B) enthält.

Die Umsetzung des Polyisocyanuratpolyisocyanats A) mit den Polyetheralkoholen zu den nichtionischen Emulgatoren B) erfolgt im Allgemeinen bei Temperaturen von 40 bis 180 °C, vorzugsweise 50 bis 150 °C, und/oder unter Einhaltung eines NCO/OH-Äquivalent-Verhältnisses von 2:1 bis 400:1, vorzugsweise von 4:1 bis 140:1.

Bei der erstgenannten Variante der separaten Herstellung der nichtionischen Emulgatoren B) werden diese vorzugsweise unter Einhaltung eines NCO/OH-Äquivalentverhältnisses von 2:1 bis 6:1 hergestellt. Bei der in situ-Herstellung der Emulgatoren B) kann selbstverständlich ein hoher Überschuss an Isocyanatgruppen innerhalb des oben genannten breiten Bereichs zur Anwendung gelangen.

Unabhängig von der Art des Emulgators B) und dessen Herstellung wird dessen Menge bzw. die Menge des bei einer in situ-Herstellung des Emulgators den Polyisocyanuratpolyisocyanaten A) zugesetzten Polyetheralkohols im Allgemeinen so bemessen, dass die letztlich erhaltenen erfindungsgemäßen hydrophil-modifizierten Polyisocyanatzusammensetzung auf Basis von 1,5-Diisocyanatopentan eine die Dispergierbarkeit des Polyisocyanatgemisches gewährleistenden Menge an Emulgator B) enthalten.

Die Herstellung der erfindungsgemäßen, aus Polyisocyanuratpolyisocyanat A) sowie mindestens einem nichtionischen Emulgator B) bestehenden hydrophil-modifizierten Polyisocyanatzusammensetzung auf Basis von 1,5-Diisocyanatopentan kann vorzugsweise lösemittelfrei oder gegebenenfalls in einem geeigneten, gegenüber Isocyanatgruppen inerten Lösemittel erfolgen. Geeignete Lösemittel sind beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat, 3 Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, Kohlensäureester, wie Dimethylcarbonat, Diethylcarbonat, 1,2-Ethylencarbonat und 1,2 Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Die erfindungsgemäßen hydrophil-modifizierten Polyisocyanatzusammensetzungen auf Basis von 1,5-Diisocyanatopentan stellen klare, farbhelle Polyisocyanatgemische dar, die sich leicht, ohne Einsatz hoher Scherkräfte durch bloßes Einrühren in Wasser dispergieren lassen. Sie zeichnen sich durch vergleichsweise niedrige Viskositäten aus, die gegenüber dem reinen Polyisocyanuratpolyisocyanat A) um mindestens 20 %, vorzugsweise mindestens 30 %, besonders bevorzugt mindesten 40 % erniedrigt sind und/oder in der Regel bei 23°C von 3600 bis 9600 mPas, vorzugsweise von 4200 bis 8800 mPas, besonders bevorzugt von 4800 bis 8000 mPas betragen, bestimmbar nach DIN EN ISO 3219:1994-10 bei einer Scherrate von 250 s⁻¹.

Die hervorragende Dispergierbarkeit bereits bei niedrigen Emulgatorgehalten in Verbindungen mit niedriger Viskosität und hohen NCO-Funktionalitäten stellt insbesondere für die Verwendung der erfindungsgemäßen hydrophil-modifizierten Polyisocyanatzusammensetzung in wässrigen 2K-PUR-Lacken einen Vorteil dar, da sich auf diese Weise hochvernetzte Beschichtungen erhalten lassen, die neben sehr guter Lösemittel- und Chemikalienbeständigkeit aufgrund des niedrigen Gehaltes an hydrophilen Gruppen insbesondere eine ausgezeichnete Wasserfestigkeit aufweisen.

Gegebenenfalls können der erfindungsgemäßen hydrophil-modifizierten Polyisocyanatzusammensetzung auf Basis von 1,5-Diisocyanatopentan vor der Emulgierung beliebige weitere nichthydrophilierte Polyisocyanate, insbesondere PDI-Polyisocyanate der obengenannten Art, zugesetzt werden. In solchen Mischungen übernehmen die erfindungsgemäßen hydrophil-modifizierten Polyisocyanate die Funktion eines Emulgators für den nachträglich zugemischten Anteil an nichthydrophilen Polyisocyanaten.

Die erfindungsgemäßen Polyisocyanatzusammensetzungen stellen wertvolle Ausgangsmaterialien zur Herstellung von Polyurethan-Kunststoffen, insbesondere nach dem Isocyanat-Polyadditionsverfahren, dar und werden hierfür verwendet.

Ebenfalls Gegenstand der Erfindung sind Beschichtungsmittel enthaltend wenigstens eine der zuvor beschriebenen Polyisocyanatzusammensetzungen sowie wenigstens eine gegenüber Isocyanatgruppen reaktive Verbindung und gegebenenfalls weitere Hilfs- und Zusatzstoffe.

Bevorzugt wird die erfindungsgemäße Polyisocyanatzusammensetzung als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wässrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vorder Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser gelöste oder dispergierte, Hydroxylgruppen aufweisende Polyacrylate, insbesondere solche des Molekulargewichtsbereichs 1 000 bis 10 000 g/mol, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgemäßen Polyisocyanatzusammensetzungen alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Bei der erfindungsgemäßen Verwendung als Vernetzerkomponente für wässrige Lackbindemittel wird die erfindungsgemäße Polyisocyanatzusammensetzung im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Gegebenenfalls kann die erfindungsgemäße Polyisocyanatzusammensetzung in untergeordneten Mengen auch nichtfunktionellen wässrigen Lackbindemitteln zur Erzielung ganz spezieller Eigenschaften, beispielsweise als Additiv zur Haftverbesserung zugemischt werden.

Selbstverständlich kann die erfindungsgemäße Polyisocyanatzusammensetzung auch in mit aus der Polyurethanchemie an sich bekannten Blockierungsmitteln blockierter Form in Kombination mit den obengenannten wässrigen Lackbindemitteln oder Lackbindemittelkomponenten im Sinne von wässrigen Einkomponenten-PUR-Einbrennsystemen eingesetzt werden. Geeignete Blockierungsmittel sind beispielsweise Malonsäurediethylester, Acetessigester, Acetonoxim, Butanonoxim, N,N-Diisopropylamin, ε- Caprolactam, 3,5-Dimethylpyrazol, 1,2,4-Triazol, Dimethyl-1,2,4-triazol, Imidazol oder beliebige Gemische dieser Blockierungsmittel.

Als Untergründe für die mit Hilfe der erfindungsgemäßen Polyisocyanatzusammensetzung formulierten wässrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im Allgemeinen besitzen die mit der erfindungsgemäßen Polyisocyanatzusammensetzung formulierten wässrigen Beschichtungsmittel, denen gegebenenfalls die auf dem Lacksektor üblichen Hilfs- und Zusatzmittel, wie z. B. Verlaufshilfsmittel, Farbpigmente, Füllstoffe, Mattierungsmittel oder Emulgatoren, einverleibt werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260 °C trocknen.

Aufgrund ihrer hervorragenden Wasseremulgierbarkeit, die eine homogene, besonders feinteilige Verteilung in wässrigen Lackbindemitteln ermöglicht, führt die Verwendung der erfindungsgemäßen Polyisocyanatzusammensetzung als Vernetzerkomponente für wässrige Polyurethanlacke zu Beschichtungen mit hervorragenden optischen Eigenschaften, insbesondere hohem Oberflächenglanz, Verlauf und hoher Transparenz.

Neben der bevorzugten Verwendung als Vernetzerkomponente für wässrige 2K-PUR-Lacke eignet sich die erfindungsgemäße hydrophil-modifizierte Polyisocyanatzusammensetzung auf Basis von PDI hervorragend als Vernetzer für wässrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

Ebenfalls Gegenstand der Erfindung ist eine Beschichtung, die durch Verwendung der oben beschriebenen Beschichtungsmittel zugänglich wird.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s⁻¹.

Die Restmonomerengehalte wurden nach DIN EN ISO 10283:2007-11 gaschromatographisch mit internem Standard gemessen.

Das zahlenmittlere Molekulargewicht (Mn) eines Polyisocyanates wurde, sofern nicht anders anegeben, Software-unterstützt mittels Gelpermeationschromatographie (GPC) bei 23 °C in Tetrahydrofuran als Lösungsmittel bestimmt. Die Messung erfolgte gemäß DIN 55672-1:2016-03 "Gelpermeationschromatographie, Teil 1 - Tetrahydrofuran als Elutionsmittel" (SECurity GPC-System von PSS Polymer Service, Durchflussrate 1,0 ml/min; Säulen: 2×PSS SDV linear M, 8×300 mm, 5 µm; RID-Detektor). Für die Kalibrierung wurden Proben von Polystyrolstandards mit bekanntem Molekulargewicht verwendet.

Der Gewichtsverhältnis an Isocyanurattrimer (n = 3) zu Isocyanuratpentamer (n = 5) ergibt sich aus den Verhältnissen der aus den Chromatogrammen der genannten GPC-Methode entnommenen jeweiligen Flächenprozenten, die näherungsweise Gewichtsanteilen gleichgesetzt wurden.

Als Maß für die Dispergierbarkeit wurden mit einem Zetasizer, Typ DTS 5100, der Fa. Malvern Instruments GmbH (DE) die mittleren Teilchengrößen in wässriger Dispersion bestimmt. Dazu wurden jeweils 25 g einer Polyisocyanatzusammensetzung in einem Erlenmeyerkolben mit 100 g entionisiertem Wasser versetzt und anschließend jeweils 1 min mit Hilfe eines Magnetrührers bei 900 U/min gerührt. Von den entstandenen wässrigen Dispersionen wurde die mittlere Teilchengröße bestimmt.

### Ausgangsverbindungen

### Polyisocyanuratpolyisocyanat A1)

1000 g (6,49 mol) 1,5-Pentamethylendiisocyanat (PDI) wurden in einen Vierhalskolben ausgestattet mit Rührer, Rückflusskühler, N₂-Durchleitungsrohr und Innenthermometer vorgelegt, dreimal bei Raumtemperatur durch Anlegen eines Vakuums von ca. 50 mbar entgast und mit Stickstoff belüftet. Anschließend wurde der Ansatz auf 60 °C erwärmt und die Katalysatorlösung (1,5 %ige N,N,N-Trimethyl-N-benzylammoniumhydroxid Lösung in einem 1:1-Gemisch von Methanol und 2-Ethyl-1-hexanol) in einer solchen Geschwindigkeit zudosiert, dass sich die Temperatur des Reaktionsgemisches trotz der exotherm einsetzenden Trimerisierungsreaktion auf maximal 80 °C erwärmte. Nach Erreichen eines NCO-Gehalts von 36,6 Gew-% wurde mit Dibutylphosphat (äquimolare Menge bezogen auf eingesetztes Trimethylbenzylammoniumhydroxid) die Reaktion gestoppt und das nicht umgesetzte monomere PDI bei einer Temperatur von 140 °C und einem Druck von 0,5 mbar im Dünnschichtverdampfer abgetrennt. Es wurde ein praktisch farbloses Polyisocyanuratpolyisocyanat erhalten, das die folgenden Kenndaten aufwies:

| | |
|---|---|
| NCO-Gehalt: | 21,6 % |
| NCO-Funktionalität (ber.): | ca. 3,8 |
| Viskosität (23 °C): | 9800 mPas |
| monomeres PDI: | 0,04 % |
| Mn: | 788 g/mol |

Isocyanurattrimer (n = 3) : Isocyanuratpentamer (n = 5) = 40,7 Gew.-% : 22,5 Gew.-% = 1,81

### Polyetheralkohole

MPEG 350: Methoxypolyethylenglykol, mittleres Molekulargewicht von 350 g/mol
MPEG 500: Methoxypolyethylenglykol, mittleres Molekulargewicht von 500 g/mol
MPEG 750: Methoxypolyethylenglykol, mittleres Molekulargewicht von 750 g/mol

### Beispiel 11

### (erfindungsgemäß)

850 g (4,37 val) des Polyisocyanuratpolyisocyanats A1) wurden bei 100 °C unter trockenem Stickstoff und Rühren vorgelegt, innerhalb von 30 min mit einer Mischung von 66 g (0,19 val) MPEG 350 und 84 g (0,17 val) MPEG 500, entsprechend einem Polyetheralkohol des mittleren Molekulargewichtes von ca. 420 g/mol, versetzt und bei dieser Temperatur weiter gerührt, bis der NCO-Gehalt der Mischung nach etwa 2 h auf einen Wert von 16,8 % gefallen war. Nach Abkühlen auf Raumtemperatur lag ein farbloses, klares Polyisocyanatgemisch mit folgenden Kenndaten vor:

| | |
|---|---|
| NCO-Gehalt: | 16,8 % |
| NCO-Funktionalität: | 3,5 |
| Viskosität (23 °C): | 7030 mPas |
| Mittlere Teilchengröße: | 89 nm |

### Beispiel 2)

### (erfindungsgemäß)

850 g (4,37 val) des Polyisocyanuratpolyisocyanats A1) wurden bei 100 °C unter trockenem Stickstoff und Rühren vorgelegt, innerhalb von 30 min mit einer Mischung von 150 g (0,30 val) MPEG 500 versetzt und bei dieser Temperatur weiter gerührt, bis der NCO-Gehalt der Mischung nach etwa 2 h auf einen Wert von 17,1 % gefallen war. Nach Abkühlen auf Raumtemperatur lag ein farbloses, klares Polyisocyanatgemisch mit folgenden Kenndaten vor:

| | |
|---|---|
| NCO-Gehalt: | 17,1 % |
| NCO-Funktionalität: | 3,5 |
| Viskosität (23 °C): | 6200 mPas |
| Mittlere Teilchengröße: | 90 nm |

### Beispiel 3)

### (erfindungsgemäß)

850 g (4,37 val) des Polyisocyanuratpolyisocyanats A1) wurden bei 100 °C unter trockenem Stickstoff und Rühren vorgelegt, innerhalb von 30 min mit einer Mischung von 75 g (0,15 val) MPEG 500 und 75 g (0,10 val) MPEG 750, entsprechend einem Polyetheralkohol des mittleren Molekulargewichtes von ca. 600 g/mol, versetzt und bei dieser Temperatur weiter gerührt, bis der NCO-Gehalt der Mischung nach etwa 2 h auf einen Wert von 17,3 % gefallen war. Nach Abkühlen auf Raumtemperatur lag ein farbloses, klares Polyisocyanatgemisch mit folgenden Kenndaten vor:

| | |
|---|---|
| NCO-Gehalt: | 17,3 % |
| NCO-Funktionalität: | 3,5 |
| Viskosität (23 °C): | 7360 mPas |
| Mittlere Teilchengröße: | 93 nm |

### Beispiel 4)

### (Vergleich, in Anlehnung an Beispiel 1 der WO 2016/146579)

850 g (4,37 val) des Polyisocyanuratpolyisocyanats A1) wurden bei 100 °C unter trockenem Stickstoff und Rühren vorgelegt, innerhalb von 30 min mit 150 g (0,06 val) MPEG 350 versetzt und bei dieser Temperatur weiter gerührt, bis der NCO-Gehalt der Mischung nach etwa 2 h auf einen Wert von 16,6 % gefallen war. Nach Abkühlen auf Raumtemperatur lag ein farbloses, klares Polyisocyanatgemisch mit folgenden Kenndaten vor:

| | |
|---|---|
| NCO-Gehalt: | 16,6 % |
| NCO-Funktionalität: | 3,4 |
| Viskosität (23 °C): | 8100 mPas |
| Mittlere Teilchengröße: | 83 nm |

### Beispiel 5)

### (Vergleich)

850 g (4,37 val) des Polyisocyanuratpolyisocyanats A1) wurden bei 100 °C unter trockenem Stickstoff und Rühren vorgelegt, innerhalb von 30 min mit einer Mischung von 32 g (0,06 val) MPEG 500 und 118 g (0,16 val) MPEG 750, entsprechend einem Polyetheralkohol des mittleren Molekulargewichtes von ca. 680 g/mol, versetzt und bei dieser Temperatur weiter gerührt, bis der NCO-Gehalt der Mischung nach etwa 2 h auf einen Wert von 17,4 % gefallen war. Nach Abkühlen auf Raumtemperatur lag ein farbloses, klares Polyisocyanatgemisch mit folgenden Kenndaten vor:

| | |
|---|---|
| NCO-Gehalt: | 17,4 % |
| NCO-Funktionalität: | 3,6 |
| Viskosität (23 °C): | 8320 mPas |
| Mittlere Teilchengröße: | 92 nm |

Die Beispiele zeigen, dass die Urethanisierung mit Methoxypolyethylenglykolen des Molekulargewichtsbereiches 420 bis 600 g/mol (Beispiele 1 bis 3) zu hydrophil-modifizierten Produkten führt, die im Vergleich zum Ausgangspolyisocyanuratpolyisocyanat deutlich niedrigere Viskositäten aufweisen, während die Urethanisierung mit Methoxypolyethylenglykolen mit mittleren Molekulargewichten außerhalb der genannten Grenzen (Vergleichsbeispiele 4 und 5) die Viskosität nur geringfügig absenkt. Das mittlere Molekulargewicht des jeweils eingesetzten Polyetheralkohols hat keinen Einfluss auf die Dispergierbarkeit, wie an den ähnlichen mittleren Teilchengrößen zu erkennen ist.

## Patentansprüche

1. Polyisocyanatzusammensetzung umfassend mindestens ein Polyisocyanuratpolyisocyanat A) auf Basis von 1,5-Diisocyanatopentan, das ein zahlenmittleres Molekulargewicht von mindestens 680 g/mol und ein Gewichtsverhältnis von Isocyanurattrimer zu Isocyanuratpentamer von kleiner als 2,2 aufweist, und eine Emulgatorkomponente B), umfassend ein Urethan erhältlich durch Urethanisierung eines Polyisocyanuratpolyisocyanats A) mit einem hydrophilen Polyetheralkohol, der ein zahlenmittleres Molekulargewicht von 400 bis 600 g/mol aufweist, wobei das zahlenmittlere Molekulargewicht jeweils durch Gelpermeationschromatographie wie in der Beschreibung angegeben bestimmbar ist.

2. Polyisocyanatzusammensetzung gemäß Anspruch 1, **dadurch gekennzeichnet, dass** das Polyisocyanuratpolyisocyanat A) ein zahlenmittleres Molekulargewicht von mindestens 700 g/mol, bevorzugt mindestens 720 g/mol, und ein Gewichtsverhältnis von Isocyanurattrimer zu Isocyanuratpentamer von kleiner als 2,0, bevorzugt kleiner als 1,9, aufweist.

3. Polyisocyanatzusammensetzung gemäß einem der Ansprüche 1 und 2, **dadurch gekennzeichnet, dass** das Polyisocyanuratpolyisocyanat A) eine mittlere NCO-Funktionalität von 3,3 bis 5,0, einen Gehalt an Isocyanatgruppen von 15,0 bis 22,9 Gew.%, bestimmbar nach DIN EN ISO 11909:2007-05, und eine Viskosität bei 23 °C von 6000 bis 12000 mPas, bestimmbar nach DIN EN ISO 3219:1994-10 bei einer Scherrate von 250 s⁻¹, aufweist.

4. Polyisocyanatzusammensetzung gemäß einem der Ansprüche 1 bis 3, **dadurch gekennzeichnet, dass** das Polyisocyanuratpolyisocyanat A) unter Verwendung von ausschließlich 1,5-Diisocyanatopentan als Diisocyanat hergestellt wurde, eine mittlere NCO-Funktionalität von 3,4 bis 5,0, vorzugsweise von 3,5 bis 4,5, einen Gehalt an Isocyanatgruppen von 17,0 bis 22,9 Gew.-%, bevorzugt 19,0 bis 22,5 Gew.-%, bestimmbar nach DIN EN ISO 11909:2007-05, und eine Viskosität bei 23 °C von 7000 bis 11000 mPas, bevorzugt 8000 bis 10000 mPas, bestimmbar nach DIN EN ISO 3219:1994-10 bei einer Scherrate von 250 s⁻¹, aufweist.

5. Polyisocyanatzusammensetzung gemäß einem der Ansprüche 1 bis 4, **dadurch gekennzeichnet, dass** der hydrophile Polyetheralkohol durch Alkoxylierung eines einwertigen Alkohols, der ein Molekulargewicht von 32 bis 74 g/mol aufweist, erhältlich ist und im statistischen Mittel 8,5 bis 13 Ethylenoxideinheiten pro Molekül aufweist.

6. Polyisocyanatzusammensetzung gemäß einem der Ansprüche 1 bis 5, **dadurch gekennzeichnet, dass** die Alkylenoxideinheiten des hydrophilen Polyetheralkohols zu 100 mol-% oder zu mindestens 80 mol-%, vorzugsweise zu mindestens 90 mol-%, jeweils bezogen auf die Gesamtmenge an Alkylenoxideinheiten, aus Ethylenoxideinheiten bestehen.

7. Polyisocyanatzusammensetzung gemäß einem der Ansprüche 1 bis 6, **dadurch gekennzeichnet, dass** der hydrophile Polyetheralkohol reine Polyethylenglycolmonomethyletheralkohole, die im statistischen Mittel 8,5 bis 13, bevorzugt 9 bis 12 und besonders bevorzugt 10 bis 11 Ethylenoxideinheiten aufweisen, umfasst oder aus diesen besteht.

8. Polyisocyanatzusammensetzung gemäß einem der Ansprüche 1 bis 7, **dadurch gekennzeichnet, dass** die Herstellung der Emulgatorkomponente B) durch Umsetzung mindestens eines Polyisocyanuratpolyisocyanates A) mit mindestens einem hydrophilen Polyetheralkohol unter Einhaltung eines NCO/OH-Äquivalent-Verhältnisses von 2:1 bis 400:1, vorzugsweise von 4:1 bis 140:1 erfolgt.

9. Polyisocyanatzusammensetzung gemäß einem der Ansprüche 1 bis 8 mit einer Viskosität bei 23 °C von 3600 bis 9600 mPas, vorzugsweise von 4200 bis 8800 mPas, besonders bevorzugt von 4800 bis 8000 mPas, jeweils bestimmt nach DIN EN ISO 3219:1994-10 bei einer Scherrate von 250 s⁻¹.

10. Verfahren zur Herstellung der Polyisocyanatzusammensetzung gemäß einem der Ansprüche 1 bis 9, **dadurch gekennzeichnet, dass** das Polyisocyanuratpolyisocyanat A) mit der Emulgatorkomponente B) vermischt wird oder die Polyisocyanatzusammensetzung durch anteilige Umsetzung von Polyisocyanaten des Polyisocyanuratpolyisocyanats A) mit dem hydrophilen Polyetheralkohol gebildet wird.

11. Verfahren gemäß Anspruch 10, **dadurch gekennzeichnet, dass** die anteilige Umsetzung bei Temperaturen von 40 bis 180 °C, vorzugsweise 50 bis 150 °C, erfolgt.

12. Verwendung der Polyisocyanatzusammensetzung gemäß einem der Ansprüche 1 bis 9 zur Herstellung von Polyurethankunststoffen.

13. Beschichtungsmittel, enthaltend wenigstens eine Polyisocyanatzusammensetzung gemäß einem der Ansprüche 1 bis 9 sowie wenigstens eine gegenüber Isocyanatgruppen reaktive Verbindung und gegebenenfalls weitere Hilfs- und Zusatzstoffen.

14. Beschichtung, erhältlich durch Verwendung des Beschichtungsmittels gemäß Anspruch 13.
